# FASCICULE DE BREVET EUROPEEN

(11) **EP 3 157 308 B1**
(45) Date de publication et mention de la délivrance du brevet: **16.05.2018**
(21) Numéro de dépôt: 16191588.9
(22) Date de dépôt: 29.09.2016
(51) Int. Cl.: H05H 1/34

(54) **TORCHE DE SOUDAGE OU DE COUPAGE À L'ARC ÉLECTRIQUE AVEC SYSTÈME D'ASSEMBLAGE RAPIDE**
ELEKTRISCHER LICHTBOGENSCHWEISSBRENNER ODER -SCHNEIDEGERÄT MIT SCHNELLMONTAGESYSTEM
ELECTRIC-ARC CUTTING OR WELDING TORCH WITH QUICK-ASSEMBLY SYSTEM

(30) Priorité: 15.10.2015 FR 1559785
(43) Date de publication de la demande: 19.04.2017
(73) Titulaire: AIR LIQUIDE WELDING FRANCE, 75007 Paris (FR)
(72) Inventeur: FRENAL, Antoine, 95460 EZANVILLE (FR); VIGNEROL, Samuel, 95380 LOUVRES (FR); RENAULT, Thierry, 95640 MARINES (FR); VITHELINGUM, Krishen, 60270 GOUVIEUX (FR)
(74) Mandataire: Knauer, Joachim

(56) Documents cités:
- EP-A1- 0 599 709
- WO-A1-96/21339
- US-A- 5 874 707
- US-A1- 2003 160 032

## Description

L'invention concerne une torche de soudage ou de coupage à l'arc électrique avec tête de torche dont l'assemblage au et le désassemblage du corps de torche est rendu plus fiable et plus robuste que dans l'art antérieur.

Les torches de coupage ou de soudage à l'arc électrique avec tête démontable comportent deux parties principales pouvant être assemblées ou désassemblées l'une de l'autre, à savoir une embase ou corps de torche habituellement fixée sur une structure, tel un bâti-porteur muni d'une poutre mobile, et un nez ou tête de torche amovible.

Des exemples de torches de coupage plasma à tête démontable sont notamment connus des documents EP-A-599709, GB-A-2091594, EP-A-801882 et EP-A-941018.

La tête de la torche contient les consommables de la torche, typiquement une électrode, un diffuseur amont de gaz, une tuyère amont, un diffuseur aval de gaz et une tuyère aval, ainsi que les circuits internes de distribution des gaz et du liquide de refroidissement.

Le corps de torche est une interface entre le générateur électrique, le boîtier haute fréquence et/ou haute tension nécessaire à l'amorçage de l'arc, le boîtier de régulation des gaz et le système de refroidissement.

De ce fait, les tuyaux et fils électriques issus des différents éléments convergent vers le corps de torche qui regroupe les différentes entrées et sorties de fluides, à savoir liquide de refroidissement, gaz plasmagène et gaz protecteur, ainsi que les connections électriques pour la cathode et les circuits d'amorçage et pilote.

La tête de torche est alimentée en fluides et en courant électrique par l'intermédiaire du corps de torche. De plus, le corps de torche assure la connexion mécanique de la tête de torche au reste de la machine de coupage ou de soudage à l'arc électrique.

Les consommables de la torche sont des pièces d'usure. Ils s'érodent plus ou moins rapidement lors de l'utilisation de la torche et il est nécessaire de les remplacer régulièrement.

La mise en oeuvre d'une torche de soudage ou de coupage à l'arc électrique implique habituellement les étapes suivantes :
- montage des consommables dans la tête de torche,
- assemblage de la tête de torche au corps de torche,
- sélection des paramètres du procédé et démarrage de l'opération de coupage ou de soudage au niveau du pupitre de commande de la machine,
- arrêt de l'opération de coupage ou de soudage,
- désassemblage de la tête de torche du corps de torche en vue de remplacer les consommables usés.

Le montage et le démontage d'une tête de torche sur un corps de torche requièrent des précautions particulières pour assurer la continuité des raccordements fluidiques (gaz et liquide de refroidissement) et électriques de la torche, c'est-à-dire l'étanchéité des raccords des conduits de fluides et le bon contact entre les raccords électriques.

En particulier, l'alignement de la tête de la torche et du corps de torche est primordial pour permettre un raccordement de la tête au corps de torche non seulement rapide mais aussi qui ne détériore pas les raccords électriques et de fluide qui font saillie à l'extrémité amont de la tête et qui doivent venir s'emboîter dans des logements à raccords complémentaires situés dans le corps de torche.

De plus, en cas de mauvais montage, un arc électrique peut s'établir entre les pièces conductrices de la tête de torche et du corps de torche. Un tel arc électrique peut conduire à la destruction de la tête et du corps de torche.

On connaît du document FR-A-2949698 une méthode d'assemblage consistant à visser la tête au corps de torche par l'intermédiaire d'un écrou de vissage. La tête de torche et/ou le corps de torche comporte en outre des moyens de détrompage axial et angulaire permettant d'aligner les conduits de fluide et les raccords électriques de la tête et du corps avant le vissage et le serrage de l'écrou.

Cependant, le vissage de l'écrou est une opération manuelle fastidieuse à l'issue de laquelle l'opérateur n'a aucun moyen de savoir si la tête de torche est correctement engagée dans le corps de torche. En effet, lors d'une utilisation intensive de la torche dans un environnement agressif tel que celui existant lors du coupage de tôle, i. e. projections de métal en fusion, génération de fumées, rayonnement UV, chaleur..., les filets de l'écrou de serrage sur la tête de torche et/ou le filet correspondant sur le corps de torche se remplissent inévitablement d'une fine poudre métallique qui rend difficile l'opération de serrage. L'opérateur, selon l'effort fourni, peut avoir l'impression que la tête de torche est correctement engagée dans le corps, alors qu'en réalité l'étanchéité fluidique et/ou le contact électrique à l'interface entre la tête et le corps de torche sont défectueux.

On connaît aussi du document FR-A-2698301 une torche de coupage à plasma d'arc dans laquelle le corps de torche comprend une cage à billes coopérant avec une gorge aménagée à la périphérie de la tête de torche.

Toutefois, du fait de l'environnement agressif rencontré en production industrielle, le mouvement des billes a tendance à s'altérer rapidement et de manière irréversible. Le corps de torche devient à terme inutilisable et doit être remplacé.

Le problème qui se pose est dès lors de fournir une torche de soudage ou de coupage à l'arc dont la tête de torche et le corps de torche peuvent être assemblés ou désassemblés aisément manuellement sans rencontrer les problèmes susmentionnés, en particulier en assurant la continuité des raccords fluidiques et électriques du corps et de la tête de torche, et ce de manière plus fiable et plus robuste que dans l'art antérieur.

La solution de l'invention est alors une torche de coupage ou de soudage à l'arc électrique comprenant un corps de torche et une tête de torche apte à et conçue pour être assemblée audit ou désassemblée dudit corps de torche, ledit corps de torche comprenant :
- une paroi périphérique et un logement axial, ledit logement axial comprenant un orifice (10a) pour recevoir au moins une partie de la tête de torche,
- un actionneur mobile en translation dans le logement axial,
- au moins un organe de blocage monté mobile sur la paroi périphérique, l'organe de blocage et la tête de torche comprenant chacun des moyens d'engagement réciproques,
- l'actionneur étant configuré pour maintenir l'organe de blocage en éloignement par rapport à la paroi périphérique de manière à permettre l'insertion de la tête de torche dans l'orifice, et
- ledit actionneur étant en outre configuré pour se déplacer dans le logement axial lorsque la tête de torche est insérée dans l'orifice, de manière à permettre un rapprochement dudit organe de blocage par rapport à la paroi périphérique jusqu'à ce que le dit organe de blocage et la tête de torche s'engagent.

Selon le cas, la torche de l'invention peut comprendre l'une ou plusieurs des caractéristiques suivantes :
- l'organe de blocage est relié à la paroi périphérique du corps de torche via une charnière, l'organe de blocage étant mobile en pivotement autour de ladite charnière.
- la torche comprend au moins deux, de préférence au moins trois, organes de blocage répartis autour de la paroi périphérique.
- l'organe de blocage comprend une butée, l'actionneur étant configuré pour venir en appui sur ladite butée de manière à maintenir l'organe de blocage en éloignement par rapport à la paroi périphérique.
- l'actionneur et/ou la butée sont conformés pour permettre un rapprochement progressif de l'organe de blocage par rapport à la paroi périphérique lorsque la tête de torche est insérée dans l'orifice du logement axial.
- l'actionneur se déplace en éloignement par rapport à l'orifice lorsque la tête de torche est insérée dans l'orifice du logement axial.
- la torche comprend un premier élément élastique configuré pour exercer une première force de compression élastique tendant à déplacer l'actionneur en direction de l'orifice du logement axial.
- une bague externe forme manchon autour d'au moins une partie du corps de torche, ladite bague externe étant mobile en translation autour dudit corps de torche.
- la torche comprend un deuxième élément élastique configuré pour exercer une deuxième force de compression élastique tendant à déplacer la bague externe en direction de l'orifice aval du logement axial.
- l'organe de blocage coopère avec la bague externe de sorte que, lorsque l'organe de blocage est éloigné de la paroi périphérique par l'actionneur, ledit organe de blocage tend à s'opposer au mouvement de translation de la bague externe en direction de l'orifice du logement axial.
- l'organe de blocage coopère avec la bague externe de sorte que l'engagement de l'organe de blocage et de la tête de torche entraîne le déplacement de la bague externe en direction de l'orifice du logement axial de sorte que ladite bague externe empêche un désengagement de l'organe de blocage et de la tête de torche.
- l'organe de blocage coopère avec la bague externe de sorte qu'un éloignement de la bague par rapport à l'orifice entraîne un éloignement de l'organe de blocage par rapport à la paroi périphérique et un désengagement de l'organe de blocage et de la tête de torche, l'actionneur étant configuré pour exercer sur la tête de torche une force tendant à éjecter ladite tête de torche de l'orifice.
- un élément compressible est agencé entre le corps de torche et la tête de torche.
- le rapport (F2/F1) d'une deuxième charge (F2) appliquée au deuxième élément élastique et d'une première charge (F1) appliquée au premier élément élastique est compris entre 0.1 et 0.95, de préférence compris entre 0.7 et 0.8.

La torche de soudage ou de coupage à l'arc électrique selon l'invention est avantageusement une torche de coupage par plasma d'arc électrique, une torche de soudage plasma, TIG, MIG ou analogue.

Par ailleurs, l'invention concerne également un procédé de coupage ou de soudage à l'arc électrique, dans lequel on met en oeuvre une torche selon l'invention pour découper ou souder une pièce métallique, en particulier en acier au carbone, en acier inoxydable, en aluminium ou en alliage d'aluminium.

Avantageusement, le procédé selon l'invention est un procédé de coupage par plasma d'arc électrique.

La présente invention va être expliquée plus en détail en références aux figures annexées parmi lesquelles :
- la Figure 1 schématise en coupe longitudinale un corps de torche de coupage ou de soudage plasma selon un mode de réalisation de l'invention,
- la Figure 2 est une vue en coupe longitudinale partielle d'une tête de torche selon l'invention assemblée à un corps de torche selon la Figure 1, et
- les Figures 3a, 3b, 3c et 3d schématisent des étapes du désassemblage d'une tête de torche et d'un corps de torche selon l'invention.

Les Figures de la présente demande schématisent des modes de réalisation de l'invention selon lesquels la torche est une torche de coupage par plasma d'arc électrique.

La présente invention est bien sûr applicable dans tout type de torche de soudage ou de coupage mettant en oeuvre un arc électrique.

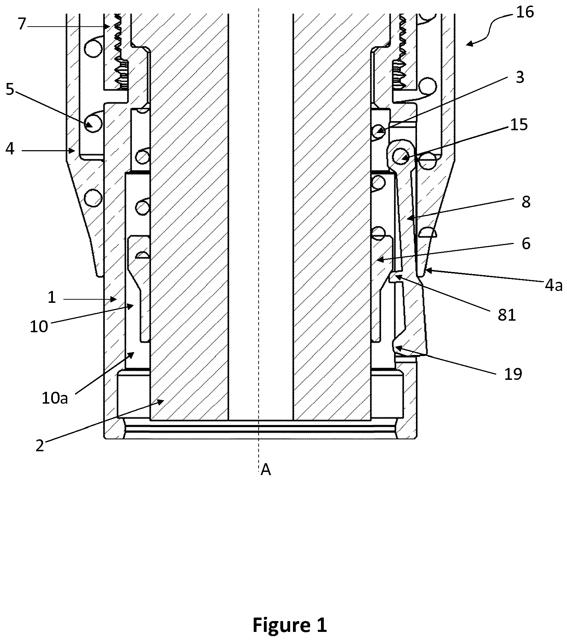

La Figure 1 schématise le corps 16 d'une torche de coupage plasma en position désassemblée de la tête de torche (non illustrée). Le corps de torche 16 comporte une paroi périphérique 1 et un porte-électrode 2 formant cathode. Le porte-électrode 2 a pour fonction d'amener le courant électrique à l'électrode de la tête de torche, alors que la paroi périphérique 1 forme un bloc isolant assurant une isolation électrique entre le porte-électrode 2 et l'élément portant la tuyère de la tête de torche 17.

Le corps de torche 16 comprend un logement axial 10 dans lequel le porte-électrode 2 est agencé, ledit logement axial 10 comportant en son extrémité aval un orifice 10a destiné à recevoir la partie amont 17a de la tête de torche 17.

La paroi périphérique 1 et la porte-électrode sont maintenues ensemble au moyen d'un fût 7, montré partiellement sur la Figure 1, vissé autour de la paroi périphérique 1.

Selon un mode de réalisation préféré de l'invention, le corps de torche 16 comprend un actionneur 6 agencé dans le logement axial 10 et mobile en translation dans ledit logement axial 10. De préférence, l'actionneur 6 est agencé entre la paroi périphérique 1 et le porte-électrode 2. Avantageusement, l'actionneur 6 est agencé relié mécaniquement au porte-électrode 2 par une liaison glissière.

En outre, le corps de torche 16 comprend au moins un organe de blocage 8 monté mobile sur la paroi périphérique 1. Selon un mode de réalisation préféré, l'organe de blocage 8 est monté pivotant sur la paroi périphérique 1 du corps de torche 16 via une charnière 15.

Avantageusement, le corps de troche 16 comprend plusieurs organes de blocage 8 répartis autour de la paroi périphérique 1. Les organes de blocage 8 sont de préférence au nombre d'au moins deux, et idéalement de trois. Le nombre maximal d'organes de blocage 8 est avantageusement de cinq.

Selon l'invention, lorsque la torche est en position désassemblée, c'est-à-dire lorsque la tête de torche 17 est désassemblée du corps de troche 16, l'actionneur 6 est configuré pour maintenir l'organe de blocage 8 en éloignement par rapport à la paroi périphérique 1 du corps de torche 16. Ainsi, comme illustré sur la Figure 1, l'actionneur 6 exerce une pression sur au moins une partie de la face interne de l'organe de blocage 8 de manière à faire pivoter l'organe de blocage 8 vers l'extérieur de la torche pour l'écarter de la paroi périphérique 1.

L'organe de blocage 8 comprend avantageusement une butée 81 contre laquelle l'actionneur 6 vient en appui. De préférence, la butée 81 est une saillie 81 aménagée sur la face interne de l'organe de blocage 8. C'est alors la pression exercée sur la butée 81 qui permet d'éloigner l'organe de blocage 8.

Selon le mode de réalisation préféré de l'invention, la torche comprend un premier élément élastique 3 configuré pour exercer une force de compression élastique tendant à déplacer l'actionneur 6 vers le bas, en direction de l'orifice 10a du logement axial 10. De préférence, le premier élément élastique 3, par exemple un ressort hélicoïdal 3, est agencé dans le logement axial 10. Avantageusement, le premier élément élastique 3 est agencé entre l'actionneur 6, la paroi périphérique 1 et le porte-électrode 2.

Selon une variante de l'invention, le premier élément élastique 3 peut être remplacé par une mise sous pression du volume délimité par l'actionneur 6, la paroi périphérique 1 et le porte-électrode 2. Dit autrement, il règne une pression supérieure à la pression atmosphérique dans ce volume, tels que dans les systèmes classiques de vérin pneumatique ou hydrauliques où la surpression est obtenue en introduisant un gaz ou un liquide sous pression dans une chambre de compression.

Ainsi, en l'absence de tête de torche insérée dans le logement axial 10, l'actionneur 6 peut se déplacer dans le logement axial 10 jusqu'à venir exercer une pression sur la face interne de l'organe de blocage 8, avantageusement au niveau de la butée 81, de manière à faire pivoter l'élément de blocage 8 vers l'extérieur, ce qui l'éloigne de la paroi périphérique 1.

Selon un mode de réalisation particulièrement avantageux, le corps de torche 16 comprend en outre une bague externe 4 formant manchon autour d'au moins une partie du corps de torche 16. La bague externe 4 est mobile en translation autour dudit corps de torche 16.

De façon avantageuse, l'organe de blocage 8 est conformé de sorte que, lorsque l'organe de blocage 8 est éloigné de la paroi périphérique 1 par l'actionneur 6, ledit organe de blocage 8 tend à s'opposer à un mouvement de translation de la bague externe 4 en direction de l'orifice 10a.

Comme on le voit sur la Figure 1, le pivotement de l'organe de blocage 8 provoqué par la poussée de l'actionneur 6 repousse la bague externe vers le haut, i. e. en éloignement par rapport à l'orifice 10a. De préférence, le déplacement vers le haut de la bague externe 4 est limité par des moyens de butée aménagés de préférence sur la bague externe 4 et/ou le fût 7, ce qui permet de limiter également le pivotement de l'organe de blocage 8.

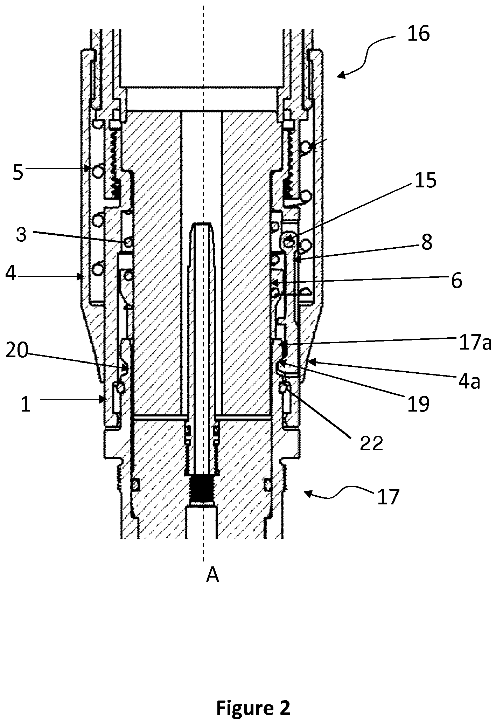

La Figure 2 schématise l'assemblage d'un corps de torche selon la Figure 1 à une tête de torche 17. La tête de torche 17 comporte de manière classique dans sa partie aval une électrode, une tuyère et une coiffe de protection (non illustrées).

L'organe de blocage 8 et la tête de torche 17 comprennent chacun des moyens d'engagement 19, 20 réciproques. Les moyens d'engagement 19, 20 peuvent être au moins une saillie 19 aménagée sur l'organe de blocage 8 coopérant avec une lumière ou gorge 20 aménagée sur la partie amont 17a de la tête de torche 17. De manière équivalente une saillie 19 et une lumière ou gorge 20 peuvent être aménagées sur la tête de torche 17 et le corps de torche 16 respectivement.

Selon l'invention, l'actionneur 6 est configuré pour se déplacer, de préférence axialement, dans le logement axial 10 lorsque la tête de torche 17 est insérée dans l'orifice 10a, le déplacement de l'actionneur 6 occasionnant un rapprochement dudit organe de blocage 8 par rapport à la paroi périphérique 1 jusqu'à ce que le dit organe de blocage 8 et la tête de torche 17 s'engagent.

Par construction, lorsque l'organe de blocage 8 et la tête de torche 17 sont engagés, le contact électrique et l'étanchéité fluidique sont assurés entre la tête et le corps de torche. L'assemblage de la torche peut donc être réalisé de façon fiable et reproductible par l'opérateur.

Selon le mode de réalisation illustré sur la Figure 2, la torche plasma est assemblée en insérant la partie amont 17a de la tête de torche 17 dans l'orifice 10a, jusqu'à venir en contact avec l'actionneur 6 pour y exercer une force s'opposant à et surpassant la force exercée par le premier élément élastique 3. L'actionneur 6 est alors repoussé vers le haut, ce qui libère l'organe de blocage 8 et permet son rapprochement de la paroi périphérique 1.

De préférence, lorsque l'organe de blocage 8 et la tête de torche 17 sont engagés via les moyens d'engagement 19, 20, l'organe de blocage 8 se retrouve aligné avec la paroi périphérique 1, de sorte que l'organe de blocage 8 n'empêche plus un mouvement de translation de la bague externe 4 en direction de l'orifice 10a. Par le terme « aligné », on entend que la surface externe de l'organe de blocage est positionnée à fleur de ou en retrait par rapport à la paroi périphérique 1, de sorte de l'organe de blocage 8 ne forme pas ou quasiment pas de surépaisseur par rapport à la paroi périphérique 1, permettant ainsi la translation de la bague externe 4 le long de la paroi périphérique 1 en direction de l'orifice 10a.

Ainsi, l'organe de blocage 8 peut se déplacer entre au moins deux positions : une position dite « éloignée » dans laquelle l'organe de blocage 8 est maintenu vers l'extérieur, i. e. en éloignement par rapport à la paroi périphérique 1, par l'actionneur 6, et une position dite « rapprochée » dans laquelle l'organe de blocage 8 est positionné dans le prolongement de la paroi périphérique 1 et forme un angle sensiblement nul avec ladite paroi périphérique 1. Bien entendu, l'organe de blocage 8 peut occuper des positions intermédiaires entre la position éloignée et la position rapprochée, ces positions intermédiaires étant fonction notamment de la position de la bague externe 4 autour du corps de torche 16 et/ou de la position de l'actionneur 6 dans le logement axial 10.

Comme illustré sur la Figure 1, la bague externe 4 comprend une extrémité aval 4a s'étendant selon une direction longitudinale autour de l'axe A de la torche, et venant en regard de l'organe de blocage 8 de manière à le maintenir engagé avec la partie amont 17a de la tête de torche 17. De cette façon, le verrouillage de l'assemblage de la torche est assuré par la bague externe 4 qui forme manchon d'autour d'au moins une partie de l'organe de blocage 8. La bague externe 4 occupe alors une position dite « basse »

De préférence, la torche comprend un deuxième élément élastique 5, qui peut être un ressort hélicoïdal, agencé de manière à exercer une force de compression élastique tendant à déplacer la bague externe 4 en direction de l'orifice aval 10a du logement axial 10.

Le deuxième élément élastique 5 est agencé de préférence entre la bague externe 4 et la paroi périphérique 1.

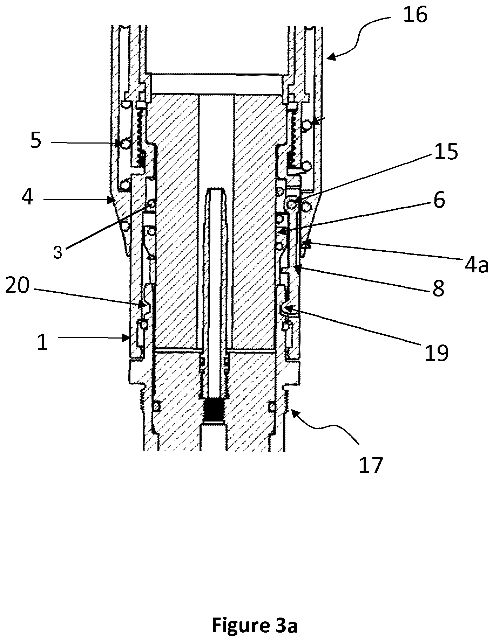

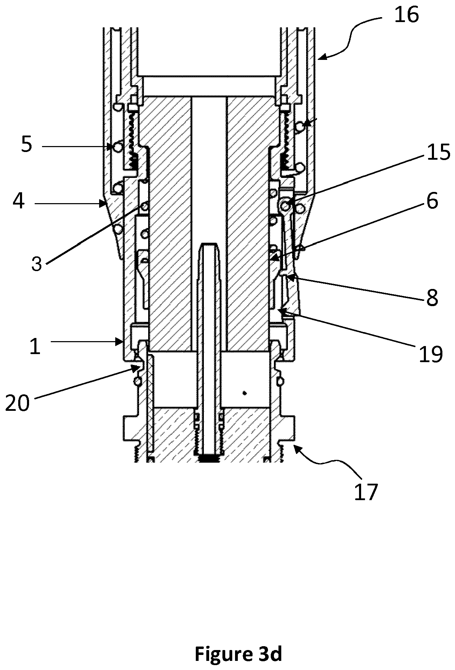

Le désassemblage de la torche selon l'invention s'effectue avantageusement selon les étapes illustrées sur les Figures 3a à 3d.

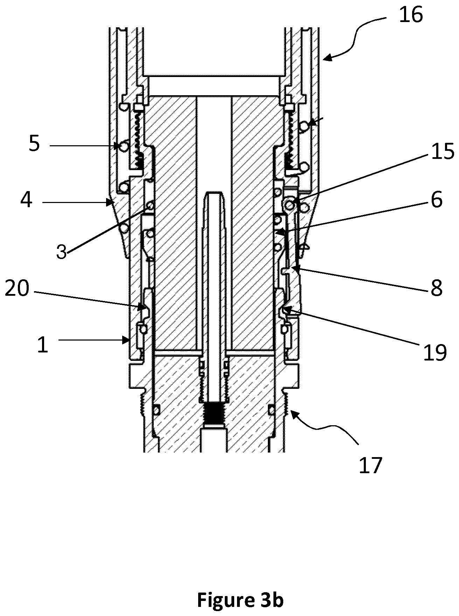

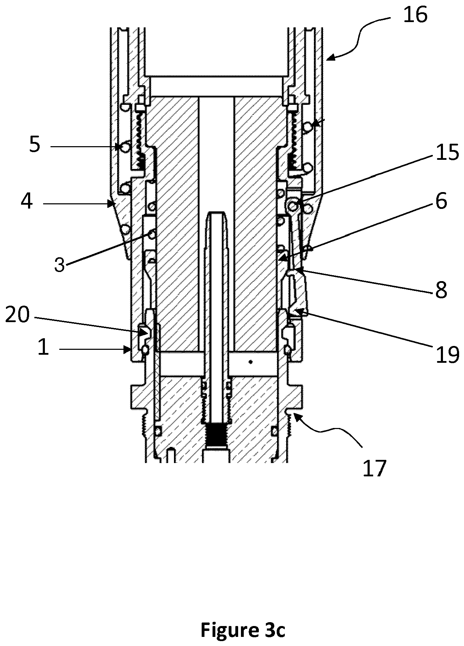

Pour désassembler la tête de torche 17 du corps de torche 16, l'opérateur déplace la bague externe 4 en éloignement par rapport à l'orifice 10a (Figure 3a). L'organe de blocage 8 est ainsi libéré de la contrainte de la bague externe 4 et peut pivoter vers l'extérieur de la torche et se désengager de l'extrémité amont 17a de la tête de torche 17 (Figure 3b). L'éjecteur 6, qui n'est plus bloqué par la butée 81 de l'organe de blocage 8, translate vers l'orifice 10a sous l'effet de la force exercée par l'élément élastique 3 (Figure 3c). La force exercée par l'élément élastique est avantageusement dimensionnée pour que la tête de torche 17 soit éjectée par l'orifice 10a sans que l'opérateur n'ait à exercer de mouvement de traction sur la tête de torche 17.

Optionnellement, la torche comprend des moyens de freinage 22 configurés pour freiner le mouvement d'éjection de la tête de torche 17 à travers l'orifice 10a. Ceci prévient les risques d'éjection brutale de la tête de torche 17 et/ou permet de palier une incertitude de la tolérance sur la force exercée par l'élément élastique 3. De préférence, un élément compressible 22 est agencé entre le corps de torche 16 et la tête de torche 17. L'élément compressible 22 peut être un joint torique en élastomère et avoir avantageusement un effort de compression se traduisant par une distance de déformation de l'élastomère au niveau du diamètre de tore compris entre 0.01 et 1 mm.

Dans le cadre de l'invention, il est avantageux de veiller à appliquer une première charge F1 au premier élément élastique 3 qui soit supérieure à la deuxième charge F2 appliquée au deuxième élément élastique 5. De préférence, on dimensionnera les premier et deuxième éléments élastiques de sorte que le rapport F2/F1 de la deuxième charge F2 appliquée au deuxième élément élastique 5 et de la première charge F1 appliquée au premier élément élastique 3 soit compris entre 0.1 et 0.95, de préférence encore compris entre 0.7 et 0.8, et idéalement de l'ordre de 0.75. Ces valeurs de rapports de force permettent de s'assurer que la bague externe 4 reste bien en position basse pour verrouiller l'organe de blocage 8.

A titre d'exemple non limitatif, dans le cas d'un rapport F2/F1 égal à 0.75, la première charge F1 sera de 40 N et la deuxième charge F2 sera de 30 N.

La présente invention permet donc de réaliser l'assemblage de la tête de torche 17 au corps de torche 16 de façon fiable et robuste en assurant à l'opérateur un bon positionnement longitudinal En outre, l'assemblage et le désassemblage de la tête de torche 17 du corps de torche 16 est simple et rapide puisqu'il requiert un minimum d'actions de la part de l'opérateur : assemblage en insérant la tête 17 dans le corps 16 de manière à exercer une poussée sur l'actionneur 6 et désassemblage en remontant la bague externe 4.

## Revendications

1. Torche de coupage ou de soudage à l'arc électrique comprenant un corps de torche (16) et une tête de torche (17) apte à et conçue pour être assemblée audit ou désassemblée dudit corps de torche (16), ledit corps de torche (16) comprenant :
- une paroi périphérique (1) et un logement axial (10), ledit logement axial (10) comprenant un orifice (10a) pour recevoir au moins une partie de la tête de torche (17),
- un actionneur (6) mobile en translation dans le logement axial (10),
- au moins un organe de blocage (8) monté mobile sur la paroi périphérique (1), l'organe de blocage (8) et la tête de torche (17) comprenant chacun des moyens d'engagement (19, 20) réciproques, **caractérisé par**
- l'actionneur (6) étant configuré pour maintenir l'organe de blocage (8) en éloignement par rapport à la paroi périphérique (1) de manière à permettre l'insertion de la tête de torche (17) dans l'orifice (10a), et
- ledit actionneur (6) étant en outre configuré pour se déplacer dans le logement axial (10) lorsque la tête de torche (17) est insérée dans l'orifice (10a), de manière à permettre un rapprochement dudit organe de blocage (8) par rapport à la paroi périphérique (1) jusqu'à ce que le dit organe de blocage (8) et la tête de torche (17) s'engagent.

2. Torche selon la revendication 1, **caractérisée en ce que** l'organe de blocage (8) est relié à la paroi périphérique (1) du corps de torche (16) via une charnière (15), l'organe de blocage (8) étant mobile en pivotement autour de ladite charnière (15).

3. Torche selon l'une des revendications précédentes, **caractérisée en ce qu'**elle comprend au moins deux, de préférence au moins trois, organes de blocage (8) répartis autour de la paroi périphérique (1).

4. Torche selon l'une des revendications précédentes, **caractérisée en ce que** l'organe de blocage (8) comprend une butée (81), l'actionneur (6) étant configuré pour venir en appui sur ladite butée (81) de manière à maintenir l'organe de blocage (8) en éloignement par rapport à la paroi périphérique (1).

5. Torche selon la revendication 4, **caractérisée en ce que** l'actionneur (6) et/ou la butée (81) sont conformés pour permettre un rapprochement progressif de l'organe de blocage (8) par rapport à la paroi périphérique (1) lorsque la tête de torche (17) est insérée dans l'orifice (10a) du logement axial (10).

6. Torche selon l'une des revendications précédentes, **caractérisée en ce que** l'actionneur (6) se déplace en éloignement par rapport à l'orifice (10a) lorsque la tête de torche (17) est insérée dans l'orifice (10a) du logement axial (10).

7. Torche selon l'une des revendications précédentes, **caractérisée en ce qu'**elle comprend un premier élément élastique (3) configuré pour exercer une première force de compression élastique tendant à déplacer l'actionneur (6) en direction de l'orifice (10a) du logement axial (10).

8. Torche selon l'une des revendications précédentes, **caractérisée en ce qu'**une bague externe (4) forme manchon autour d'au moins une partie du corps de torche (16), ladite bague (4) externe étant mobile en translation autour dudit corps de torche (16).

9. Torche selon la revendication 8, **caractérisée en ce qu'** elle comprend un deuxième élément élastique (5) configuré pour exercer une deuxième force de compression élastique tendant à déplacer la bague externe (4) en direction de l'orifice (10a) du logement axial (10).

10. Torche selon l'une des revendications 8 ou 9, **caractérisée en ce que** l'organe de blocage (8) coopère avec la bague externe (4) de sorte que, lorsque l'organe de blocage (8) est éloigné de la paroi périphérique (1) par l'actionneur (6), ledit organe de blocage (8) tend à s'opposer au mouvement de translation de la bague externe (4) en direction de l'orifice (10) du logement axial (10).

11. Torche selon l'une des revendications 8 à 10, **caractérisée en ce que** l'organe de blocage (8) coopère avec la bague externe (4) de sorte que l'engagement de l'organe de blocage (8) et de la tête de torche (17) entraîne le déplacement de la bague externe (4) en direction de l'orifice (10a) du logement axial (10) de sorte que ladite bague externe (4) empêche un désengagement de l'organe de blocage (8) et de la tête de torche (17).

12. Torche selon l'une des revendications précédentes, **caractérisée en ce que** l'organe de blocage (8) coopère avec la bague externe (4) de sorte qu'un éloignement de la bague (4) par rapport à l'orifice (10a) entraîne un éloignement de l'organe de blocage (8) par rapport à la paroi périphérique (1) et un désengagement de l'organe de blocage (8) et de la tête de torche (17), l'actionneur (6) étant configuré pour exercer sur la tête de torche (17) une force tendant à éjecter ladite tête de torche (17) de l'orifice (10a).

13. Torche selon l'une des revendications précédentes, **caractérisée en ce qu'**un élément compressible (22) est agencé entre le corps de torche (16) et la tête de torche (17).

14. Torche selon l'une des revendications 9 à 13, **caractérisé en ce que** le rapport (F2/F1) d'une deuxième charge (F2) appliquée au deuxième élément élastique (5) et d'une première charge (F1) appliquée au premier élément élastique (3) est compris entre 0.1 et 0.95, de préférence compris entre 0.7 et 0.8.

15. Procédé de coupage ou de soudage à l'arc électrique, dans lequel on met en oeuvre une torche selon l'une des revendications précédentes pour découper ou souder une pièce métallique, en particulier en acier au carbone, en acier inoxydable, en aluminium ou en alliage d'aluminium.

## Patentansprüche

1. Elektrisches Lichtbogenschneidgerät oder elektrischer Lichtbogenschweißbrenner, umfassend einen Brennerkörper (16) und einen Brennerkopf (17), der geeignet ist oder ausgelegt ist, um an dem Brennerkörper (16) montiert oder davon abmontiert zu werden, wobei der Brennerkörper (16) aufweist:
- eine Umfangswand (1) und eine axiale Aufnahme (10), wobei die axiale Aufnahme (10) eine Öffnung (10a) aufweist, um mindestens einen Teil des Brennerkopfes (17) aufzunehmen,
- einen Aktuator (6), der in der axialen Aufnahme (10) translatorisch beweglich ist,
- mindestens ein Blockierorgan (8), das an der Umfangswand (1) beweglich befestigt ist, wobei das Blockierorgan (8) und der Brennerkopf (17) jeweils gegenseitige Eingriffsmittel (19, 20) aufweisen,
**gekennzeichnet durch**
- den Aktuator (6), der konfiguriert ist, um das Blockierorgan (8) in Entfernung gegenüber der Umfangswand (1) derart zu halten, um das Einfügen des Brennerkopfes (17) in die Öffnung (10a) zu ermöglichen, und
- den Aktuator (6), der ferner konfiguriert ist, um in der axialen Aufnahme (10) verschoben zu werden, wenn der Brennerkopf (17) in die Öffnung (10a) eingefügt ist, derart, um ein Annähern des Blockierorgans (8) gegenüber der Umfangswand (1) zu ermöglichen, bis das Blockierorgan (8) und der Brennerkopf (17) ineinander eingreifen.

2. Brenner nach Anspruch 1, **dadurch gekennzeichnet, dass** das Blockierorgan (8) mit der Umfangswand (1) des Brennerkörpers (16) über ein Scharnier (15) verbunden ist, wobei das Blockierorgan (8) schwenkbeweglich um das Scharnier (15) ist.

3. Brenner nach einem der vorhergehenden Ansprüche, **dadurch gekennzeichnet, dass** er mindestens zwei, vorzugsweise mindestens drei Blockierorgane (8) aufweist, die um die Umfangswand (1) verteilt sind.

4. Brenner nach einem der vorhergehenden Ansprüche, **dadurch gekennzeichnet, dass** das Blockierorgan (8) einen Anschlag (81) aufweist, wobei der Aktuator (6) konfiguriert ist, um auf dem Anschlag (81) derart zum Aufliegen zu kommen, um das Blockierorgan (8) in Entfernung gegenüber der Umfangswand (1) zu halten.

5. Brenner nach Anspruch 4, **dadurch gekennzeichnet, dass** der Aktuator (6) und/oder der Anschlag (81) ausgebildet sind, um ein allmähliches Annähern des Blockierorgans (8) gegenüber der Umfangswand (1) zu ermöglichen, wenn der Brennerkopf (17) in die Öffnung (10a) der axialen Aufnahme (10) eingefügt ist.

6. Brenner nach einem der vorhergehenden Ansprüche, **dadurch gekennzeichnet, dass** der Aktuator (6) von der Öffnung (10a) weg bewegt wird, wenn der Brennerkopf (17) in die Öffnung (10a) der axialen Aufnahme (10) eingefügt ist.

7. Brenner nach einem der vorhergehenden Ansprüche, **dadurch gekennzeichnet, dass** er ein erstes elastisches Element (3) aufweist, das konfiguriert ist, um eine erste elastische Kompressionskraft auszuüben, die dazu neigt, den Aktuator (6) in Richtung der Öffnung (10a) der axialen Aufnahme (10) zu bewegen.

8. Brenner nach einem der vorhergehenden Ansprüche, **dadurch gekennzeichnet, dass** ein Außenring (4) eine Muffe um mindestens einen Teil des Brennerkörpers (16) bildet, wobei der Außenring (4) um den Brennerkörper (16) translatorisch beweglich ist.

9. Brenner nach Anspruch 8, **dadurch gekennzeichnet, dass** er ein zweites elastisches Element (5) aufweist, das konfiguriert ist, um eine zweite elastische Kompressionskraft auszuüben, die dazu neigt, den Außenring (4) in Richtung der Öffnung (10a) der axialen Aufnahme (10) zu bewegen.

10. Brenner nach einem der Ansprüche 8 oder 9, **dadurch gekennzeichnet, dass** das Blockierorgan (8) mit einem Außenring (4) derart zusammenwirkt, dass, wenn das Blockierorgan (8) von der Umfangswand (1) durch den Aktuator (6) entfernt ist, das Blockierorgan (8) dazu neigt, sich der Translationsbewegung des Außenrings (4) in Richtung der Öffnung (10) der axialen Aufnahme (10) entgegenzusetzen.

11. Brenner nach einem der Ansprüche 8 bis 10, **dadurch gekennzeichnet, dass** das Blockierorgan (8) mit einem Außenring (4) derart zusammenwirkt, dass das Eingreifen des Blockierorgans (8) und des Brennerkopfes (17) das Bewegen des Außenrings (4) in Richtung der Öffnung (10a) der axialen Aufnahme (10) derart bewirkt, dass der Außenring (4) ein Lösen des Blockierorgans (8) und des Brennerkopfes (17) verhindert.

12. Brenner nach einem der vorhergehenden Ansprüche, **dadurch gekennzeichnet, dass** das Blockierorgan (8) mit dem Außenring (4) derart zusammenwirkt, dass ein Entfernen des Rings (4) gegenüber der Öffnung (10a) ein Entfernen des Blockierorgans (8) gegenüber der Umfangswand (1) und ein Lösen des Blockierorgans (8) und des Brennerkopfes (17) verursacht, wobei der Aktuator (6) konfiguriert ist, um auf den Brennerkopf (17) eine Kraft auszuüben, die dazu neigt, den Brennerkopf (17) aus der Öffnung (10a) auszustoßen.

13. Brenner nach einem der vorhergehenden Ansprüche, **dadurch gekennzeichnet, dass** ein zusammendrückbares Element (22) zwischen dem Brennerkörper (16) und dem Brennerkopf (17) angeordnet ist.

14. Brenner nach einem der Ansprüche 9 bis 13, **dadurch gekennzeichnet, dass** das Verhältnis (F2/F1) einer zweiten Last (F2), die auf das zweite elastische Element (5) ausgeübt wird, und einer ersten Last (F1), die auf das erste elastische Element (3) ausgeübt wird, zwischen 0,1 und 0,95, vorzugsweise zwischen 0,7 und 0,8, beträgt.

15. Elektrisches Lichtbogenschneid- oder Lichtbogenschweißverfahren, das einen Brenner nach einem der vorhergehenden Ansprüche einsetzt, um ein Metallstück, insbesondere aus Kohlenstoffstahl, aus Edelstahl, aus Aluminium oder aus Aluminiumlegierung zu schneiden oder zu schweißen.

## Claims

1. An electric arc cutting or welding torch comprising a torch body (16) and a torch head (17) which is able and designed to be assembled to or disassembled from said torch body (16), said torch body (1,6) comprising:
- a peripheral wall (1) and an axial housing (10), said axial housing (10) comprising an orifice (10a) for receiving at least part of the torch head (17);
- an actuator (6) which is mobile in translation in the axial housing (10);
- at least one blocking element (8) which is mounted so as to be mobile on the peripheral wall (1), the blocking element (8) and the torch head (17) each comprising reciprocal engagement means (19, 20);
**characterised by**
- the actuator (6) being configured to maintain the blocking element (8) spaced relative to the peripheral wall (1), so as to permit the insertion of the torch head (17) in the orifice (10a); and
- said actuator (6) also being configured to be displaced in the axial housing (10) when the torch head (17) is inserted in the orifice (10a), so as to enable said blocking element (8) to be brought towards the peripheral wall (1) until said blocking element (8) and the torch head (17) engage.

2. The torch according to claim 1, **characterised in that** the blocking element (8) is connected to the peripheral wall (1) of the torch body (16) via a hinge (15), the blocking element (8) being pivotable about said hinge (15).

3. The torch according to either one of the preceding claims, **characterised in that** said torch comprises at least two, preferably at least three, blocking elements (8) which are distributed around the peripheral wall (1).

4. The torch according to any one of the preceding claims, **characterised in that** the blocking element (8) comprises a stop (81), the actuator (6) being configured to be supported on said stop (81), so as to maintain the blocking element (8) spaced from the peripheral wall (1).

5. The torch according to claim 4, **characterised in that** the actuator (6) and/or the stop (81) are formed to allow the blocking element (8) to be brought progressively towards the peripheral wall (1) when the torch head (17) is inserted in the orifice (10a) in the axial housing (10).

6. The torch according to any one of the preceding claims, **characterised in that** the actuator (6) is displaced away from the orifice (10a) when the torch head (17) is inserted in the orifice (10a) in the axial housing (10).

7. The torch according to any one of the preceding claims, **characterised in that** said torch comprises a first elastic element (3) which is configured to exert a first elastic compression force which tends to displace the actuator (6) in the direction of the orifice (10a) in the axial housing (10).

8. The torch according to any one of the preceding claims, **characterised in that** an outer ring (4) forms a sleeve around at least part of the torch body (16), said outer ring (4) being mobile in translation around said torch body (16).

9. The torch according to claim 8, **characterised in that** said torch comprises a second elastic element (5) which is configured to exert a second elastic compression force which tends to displace the outer ring (4) in the direction of the orifice (10a) in the axial housing (10).

10. The torch according to any one of claims 8 or 9, **characterised in that** the blocking element (8) cooperates with the outer ring (4) such that, when the blocking element (8) is spaced from the peripheral wall (1) by the actuator (6), said blocking element (8) tends to oppose the movement of translation of the outer ring (4) in the direction of the orifice (10a) in the axial housing (10).

11. The torch according to any one of claims 8 to 10, **characterised in that** the blocking element (8) cooperates with the outer ring (4) such that the engagement of the blocking element (8) and the torch head (17) gives rise to the displacement of the outer ring (4) in the direction of the orifice (10a) in the axial housing (10), such that said outer ring (4) prevents disengagement of the blocking element (8) and the torch head (17).

12. The torch according to any one of the preceding claims, **characterised in that** the blocking element (8) cooperates with the outer ring (4), such that spacing of the ring (4) from the orifice (10a) gives rise to spacing of the blocking element (8) from the peripheral wall (1), and disengagement of the blocking element (8) and the torch head (17), the actuator (6) being configured to exert a force on the torch head (17) which tends to eject the torch head (17) from the orifice (10a).

13. The torch according to any one of the preceding claims, **characterised in that** a compressible element (22) is arranged between the torch body (16) and the torch head (17).

14. The torch according to any one of preceding claims 9 to 13, **characterised in that** the ratio (F2/F1) of a second load (F2) applied to the second elastic element (5), and of a first load (F1) applied to the first elastic element (3), is between 0.1 and 0.95, preferably between 0.7 and 0.8.

15. An electric arc cutting or welding process in which a torch according to any one of the preceding claims is implemented in order to cut or weld a metal part, in particular made of carbon steel, stainless steel, aluminium, or an aluminium alloy.
